# EUROPÄISCHE PATENTSCHRIFT

(11) **EP 2 019 757 B1**
(45) Veröffentlichungstag und Bekanntmachung des Hinweises auf die Patenterteilung: **14.08.2013**
(21) Anmeldenummer: 07724180.0
(22) Anmeldetag: 12.04.2007
(51) Int. Cl.: B60C 9/22

(54) **FAHRZEUGLUFTREIFEN MIT GÜRTELBANDAGE**
PNEUMATIC VEHICLE TYRE WITH BELT BANDAGE
PNEUMATIQUE DE VÉHICULE AVEC BANDAGE DE CEINTURE

(30) Priorität: 16.05.2006 DE 102006022670
(43) Veröffentlichungstag der Anmeldung: 04.02.2009
(73) Patentinhaber: Continental Reifen Deutschland GmbH, 30165 Hannover (DE)
(72) Erfinder: SCHACHT, Arne, 30177 Hannover (DE); DEHNERT, Jörg, 31535 Neustadt (DE); HEINE, Stefan, 30163 Hannover (DE); HERDEN, Sven, 30880 Laatzen (DE)
(74) Vertreter: Finger, Karsten
(86) Internationale Anmeldenummer: PCT/EP2007/003239
(87) Internationale Veröffentlichungsnummer: WO 2007/131581

(56) Entgegenhaltungen:
- EP-A1- 0 790 143
- EP-A1- 1 580 030
- EP-A2- 0 335 588
- EP-A2- 1 203 672

## Beschreibung

Die Erfindung betrifft einen Fahrzeugluftreifen in Radialbauart mit einer Radialkarkasse, einem Laufstreifen, einem zwischen Laufstreifen und Karkasse angeordneten, zumindest zweilagigen Gürtel sowie einer an der Außenseite des Gürtels angeordneten, zumindest eine *den gesamten Gürtel abdeckende* Bandagenlage aufweisenden Gürtelbandage aus einem Bandagenmaterial mit in Umfangsrichtung verlaufenden Verstärkungskorden,

Aus der EP 0 319 588 B 1 ist es bekannt, bei einem Radialreifen auf der äußeren Oberfläche des aufgebauten Gürtels kontinuierlich und spiralig in Umfangsrichtung umlaufend organische Faserkorde zu wickeln, um eine Bandage zur Verstärkung des Gürtels zu bilden. Die Bandage kann aus einem Bandagestreifen spiralig gewickelt werden, welcher eine Vielzahl von parallel zueinander und in Streifenlängsrichtung verlaufenden, in Gummi eingebetteten Korden enthält. Während des spiraligen Wickelns wird die Wickelspannung derart geändert, dass sie im zentralen Bereich des Reifens ein Minimum und in den Schulterbereichen des Reifens ein Maximum ist. Bei einer anderen Ausführungsvariante wird die angelegte Wickelspannung konstant gehalten, wobei die Bandage auf Gürtellagen gewickelt wird, die auf einer konturierten Trommel aufgebracht und daher von ihrer Kontur her bereits gemäß ihrer Kontur im fertigen Reifen geformt sind.

Ein Fahrzeugluftreifen der eingangs genannten Art ist aus der EP-A1-0 790 143 bekannt. Dieser Fahrzeugluftreifen weist einen zumindest zweilagigen Gürtel auf, welcher mit einer Gürtelbandage bedeckt ist. Die Gürtelbandage besteht aus einer den Gürtel über seine Breite bedeckenden Bandagcnlage und zwei mit dieser überlappenden axial beabstandeten, im Bereich der Gürtelkanten angeordneten, schmalen Bandagenlagen. Die bedeckende Bandagenlage besteht aus organischen Faserkorden mit niedrigem Zugelastizitätsmodul, die Kantenbänder aus organischen Faserkorden mit hohem Modul. Durch diese Maßnahme soll die Hochgeschwindigkeitstauglichkeit des Reifens verbessert werden.

Die EP-A2-1 203 672 betrifft einen Fahrzeugluftreifen mit einer Gürtelbandage mit einem Paar von "high modulus edge bands" und einem "low modulus middle band" zwischen den beiden "high modulus edge bands". Die EP-A1-1 580 030 befasst sich mit einer einlagigen Gürtelbandage mit zwei seitlichen Abschnitten und einem mittleren Abschnitt. In den beiden seitlichen Abschnitten wird ein Kord mit einem "high modulus" und im mittleren Abschnitt ein Kord mit einem "low modulus" verwendet. Die EP-A2-0 335 588 offenbart eine Bandage, die durch spiraliges Wickeln eines Hybridkordes, welcher aus einem "high elastic modulus filament" und einem "low elastic modulus filament" besteht, erstellt wird.

Je nach dem Aufbau eines Reifens ändert sich in Abhängigkeit von der Rotationsgeschwindigkeit unter den auf den Reifen wirkenden Zentrifugalkräften die Außenkontur des Reifens. Es stellt sich eine sogenannte dynamische Außenkontur ein, die größer ist als die Kontur des ruhenden Reifens, wobei das Wachstum im Laufstreifenmittelbereich größer ist als oder gleich groß ist wie in den Seitenbereichen. Bei herkömmlich aufgebauten Reifen mit zwei Bandagenlagen mit Festigkeitsträgern aus Nylon erfolgt ein im Wesentlichen gleichmäßiges dynamisches Wachstums mit zunehmender Fahrgeschwindigkeit.

Im unteren Geschwindigkeitsbereich um etwa 80 km/h bis 90 km/h sind gute Aquaplaning-Eigenschaften erwünscht, wobei eine schmale Bodenaufstandsfläche von Vorteil ist, da sie wesentlich weniger Wasserverdrängung erfordert als eine breite, Im Geschwindigkeitsbereich von etwa 100 km/h bis 160 km/h ist für einen geringen Abrieb eine eher flache Außenkontur günstig. Bei sehr hohen Geschwindigkeiten im Bereich jenseits von 200 km/h wäre es für die Hochgeschwindigkeits-Performance, vor allem für die Haltbarkeit des Reifens von Vorteil, wenn die dynamische Außenkontur rund ist.

Der Erfindung liegt die Aufgabe zu Grunde, einen Reifen der eingangs genannten Art derart auszuführen, dass er gute Aquaplaning-Eigenschaften im unteren Geschwindigkeitsbereich um etwa 80 km/h bis 90 km/h, einen geringem Abrieb im mittleren Geschwindigkeitsbereich von etwa 100 km/h bis 160 km/h und eine gute Hochgeschwindigkeits-Performance bei Geschwindigkeiten jenseits von 200 km/h aufweist.

Gelöst wird die gestellte Aufgabe erfindungsgemäß durch
eine am montierten und aufgepumpten Reifen gemessene Außenkontur, die definiert ist durch ein Verhältnis von R_{A} zur Nennbreite N_{B} von 1 bis 3 und ein Verhältnis von TW 45 zur Nennbreite N_{B} von 0,66 bis 0,92,
wobei TW 45 die Breite des Laufstreifens zwischen zwei Punkten P_{TW} ist, wobei jeder dieser Punkte P_{TW} der Schnittpunkt einer unter 45° zur Radialen an der Schulteraußenseite verlaufenden Tangente mit einer in Verlängerung der Außenkontur des Laufstreifens verlaufenden Kurve ist,
wobei R_{A} der Radius eines Kreisbogens ist, welcher durch die beiden Punkte P_{TW} und den Scheitelpunkt der Außenkontur des Laufstreifens geht,
ferner durch
*eine auf der den gesamten Gürtel abdeckenden Bandagenlage mittig angeordneten und symmetrisch zur Äquatorebene des Reifens verlaufenden, ebenfalls über den Reifenumfang umlaufenden Mittenbandage, wobei ein zentraler Bereich der Gürtelbandage aus dem zentralen Abschnitt der Bandagenlage und der Mittenbandage besteht, deren Breiten zumindest im Wesentlichen übereinstimmen,*
ein Bandagenmaterial im zentralen Bereich der Gürtelbandage, welches einen zumindest im Wesentlichen linearen Kraft-Dehnungs-Verlauf mit etwa 1000 N/cm bei 8 % Dehnung aufweist,
und ein Bandagenmaterial in den seitlichen Bereichen der Gürtelbandage, welches einen Kraft-Dehnungs-Verlauf mit 100 N/cm bis 500 N/cm bei 1 % bis 3 % Dehnung mit einem im Wesentlichen linearen Anstieg auf 1500 N/cm bis 3000 N/cm bei 8 % Dehnung aufweist,

Gemäß der Erfindung ausgeführte Reifen zeigen ein besonderes dynamisches Wachstum bei zunehmender Geschwindigkeit. Der ruhende Reifen hat eine runde Außenkontur mit einer schmalen Bodenaufstandsfläche, die auch im unteren Geschwindigkeitsbereich erhalten bleibt, da das dynamische Wachstum bis etwa 80 km/h vernachlässigbar ist. Die schmale Bodenaufstandsfläche erfordert nur eine geringe Wasserverdrängung, der Reifen besitzt daher gute Aquaplaning-Eigenschaften. Im Geschwindigkeitsbereich ab etwa 100 km/h bis 160 km/h sorgt die erfindungsgemäß ausgeführte Bandage dafür, dass sich eine flachere Kontur einstellt. Dadurch ist ein gleichmäßiger und geringer Abrieb in diesem Geschwindigkeitsbereich gewährleistet. Bei hohen Geschwindigkeiten, jenseits von 200 km/h stoppt das Festigkeitsträgermaterial in den seitlichen Abschnitten der Vollbandage das Schulterwachstum, die Verstärkungskorde im mittleren Bereich der Bandagenlagen gestatten ein Wachstum, sodass sich die erwünschte runde Hochgeschwindigkeitskontur einstellt. *Mit einer doppelten Bandagierung im zentralen Bereich der Gürtelbandage lässt sich besonders exakt der erwünschte Kraft-Dehnungs-Verlauf des Bandagenmaterials einstellen.*

Gemäß einer bevorzugten Ausführungsform der Erfindung weist das Bandagenmaterial in den seitlichen Bereichen einen Kraft-Dehnungs-Verlauf mit bis zu 150 N/cm bis 2,5 % Dehnung und mindestens 2000 N/cm bei 8 % Dehnung auf (Anspruch 2). Ein derartiges Bandagenmaterial ist besonders vorteilhaft für das gemäß der Erfindung erwünschte dynamische Wachstum des Reifens bei zunehmender Geschwindigkeit, insbesondere dann, wenn der Reifen derart gestaltet ist, dass das Verhältnis des Radius R_{A} zur Nennbreite N_{B} zwischen 1,3 und 2,0 und das Verhältnis der Laufstreifenbreite TW 45 zur Nennbreite N_{B} zwischen 0,70 und 0,85 beträgt (Ansprüche 8 und 9).

Der zentrale Bereich der Gürtelbandage kann gemäß der Erfindung eine Breite von 10 % bis 80 %, insbesondere mindestens 50 %, der Breite der Bandagenlage aufweisen. Die günstigste Breite für den zentralen Bereich hängt vor allem von der Reifendimension und vom Reifentyp, beispielsweise davon, für welchen Geschwindigkeitsbereich der Reifen vorgesehen ist, ab.

Bei einer bevorzugten Ausführungsvariante der Erfindung besteht der zentrale Bereich der Gürtelbandage aus einem zentralen Abschnitt der Bandagenlage und aus einer gesonderten Mittenbandage, deren Breiten zumindest im Wesentlichen übereinstimmen. Mit einer doppelten Bandagierung im zentralen Bereich der Gürtelbandage lässt sich besonders exakt der erwünschte Kraft-Dehnungs-Verlauf des Bandagenmaterials einstellen.

Der erwünschte Kraft-Dehnungs-Verlauf der Bandagenmaterialien in den seitlichen Bereichen und im zentralen Bereich der Gürtelbandage lässt sich mit bestimmten Verstärkungskordmaterialien besonders gut einstellen bzw. erzielen. In diesem Zusammenhang ist es von Vorteil, wenn der Verstärkungskord in den seitlichen Bereichen der Gürtelbandage bzw. den seitlichen Abschnitten der Bandagenlage ein Hybridkord ist, welcher vorzugsweise einen Kord-Kern aus Nylon und eine Umwicklung aus Aramid aufweist (Anspruch 6). Im zentralen Bereich der Gürtelbandage bzw. im zentralen Abschnitt der Bandagenlage und in der Mittenbandage wird bevorzugt als Verstärkungskord ein Kord aus Nylon verwendet (Anspruch 7).

Weitere Merkmale, Vorteile und Einzelheiten der Erfindung werden anhand der Zeichnung, die schematisch Ausführungsbeispiele darstellt, näher beschrieben. Dabei zeigen
Fig. 1 einen Querschnitt durch einen gemäß der Erfindung ausgeführten Fahrzeugluftreifen für Personenkraflwagen,
Fig. 2 im Querschnitt den Verlauf der Außenkontur des in Fig. 1 gezeigten erfindungsgemäßen Reifens im Vergleich zu einer Querschnitts- Außenkontur eines Reifens gemäß dem Stand der Technik,
Fig. 3 und Fig. 4 Außenkonturen eines erfindungsgemäßen Reifens bei unterschiedlichen Fahrgeschwindigkeiten im Vergleich zur Außenkontur des ruhenden Reifens,
Fig. 5 Kraft-Dehnungs-Diagramme von in der Bandage eines erfindungsgemäß ausgeführten Reifens bevorzugt einsetzbaren Verstärkungsmaterialien und
Fig. 6 ein Diagramm mit dynamischen Konturen des relativen Wachstums zur ruhenden Reifenkontur eines erfindungsgemäß ausgeführten Reifens im Vergleich zu einem Reifen mit einer herkömmlichen Gürtelbandage bei unterschiedlichen Geschwindigkeiten.

Die in der nachfolgenden Beschreibung enthaltenen Werte für Radien und sonstige Abmessungen des Reifens sind auf einen auf einer Felge montierten und unter Nenndruck (gemäß E.T.R.T.O. Standards) gesetzten Reifen bezogen. Die Formdaten (Abmessungen aus der Vulkanisationsform) weisen im Allgemeinen im Wesentlichen übereinstimmende Abmessungen auf.

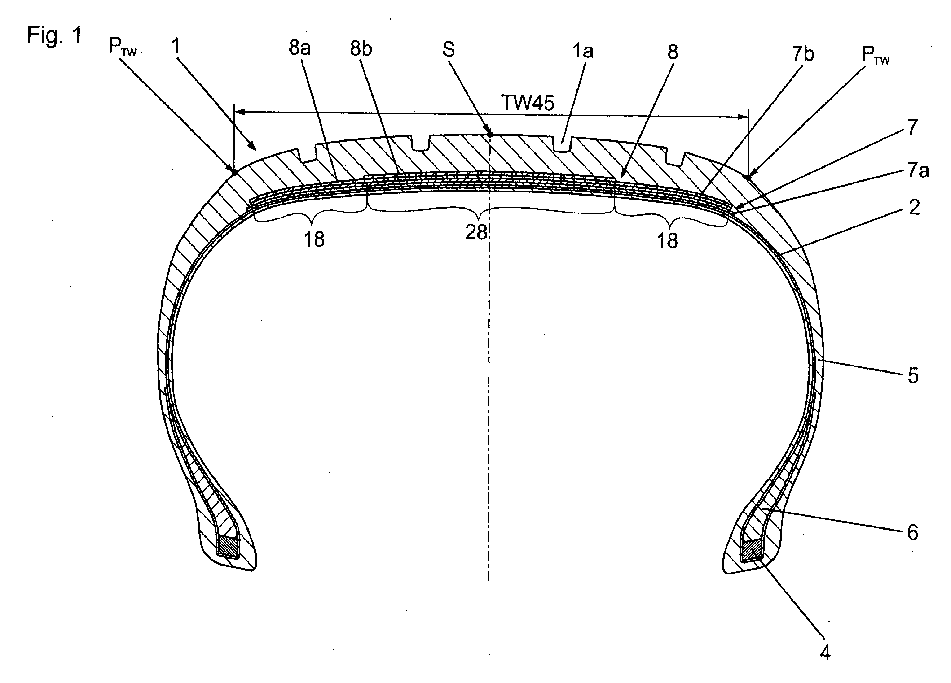

Der in Fig. 1 schematisch gezeigte Fahrzeugluftreifen ist ein Pkw-Reifen mit einem Laufstreifen 1, einer Karkasse 2, die in Wulstbereichen um Wulstkurve 4 verläuft und im Bereich von Seitenwänden 5 endet, mit Kemprofilen 6 radial außerhalb der Wulstkerne 4 und einem Gürtelverband 7 bestehend aus zwei Gürtellagen 7a, 7b und einer Bandage 8 aus zwei Bandagenlagen 8a, 8b.

Der Laufstreifen 1 ist mit einer Profilierung versehen, die beliebig ausgeführt sein kann, und von welcher in Fig. 1 beispielhaft Umfangsnuten 1 a dargestellt sind. Zwischen dem Laufstreifen 1 und der Karkasse 2 befinden sich die beiden Gürtellagen 7a, 7b, wobei die radial weiter innen gelegene Gürtellage 7a die breitere der beiden Gürtellagen 7a, 7b ist. Die beiden Gürtellagen 7a, 7b können auf herkömmliche Weise aufgebaut sein und aus in eine Gummimischung eingebetteten und innerhalb jeder Lage jeweils parallel zueinander verlaufenden Festigkeitsträgern, insbesondere Stahlkorden, bestehen. Die gegenseitige Anordnung der Stahlkorde in den beiden Gürtellagen 7a, 7b erfolgt derart, dass sich die in der einen Lage verlaufenden Stahlkorde mit jenen, die in der zweiten Gürtellage verlaufen, kreuzen, wobei die Stahlkorde in jeder der Gürtellagen 7a, 7b mit der Umfangsrichtung einen spitzen Winkel einschließen, der bei erfindungsgemäß ausgeführten Reifen in der Größenordnung von 22° bis 38°, beispielsweise 28°, gewählt wird.

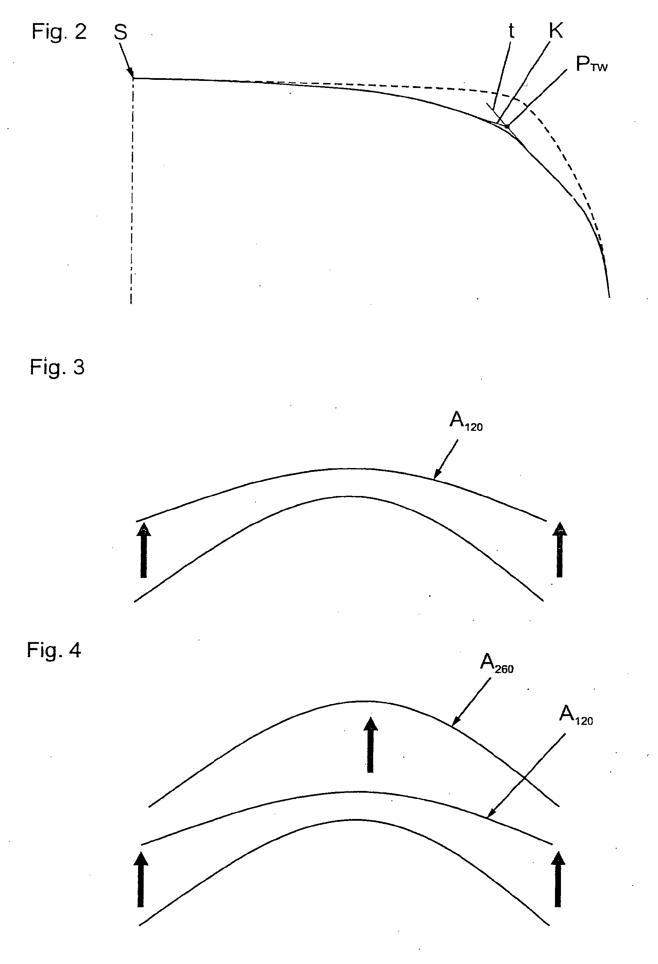

Die in Fig. 1 und Fig. 2 eingezeichnete Laufstreifenbreite TW 45 ist etwas größer als die Breite des Reifenabdruckes im Untergrund, wenn der Reifen auf einer Felge montiert ist und unter Druck gesetzt ist. Die Breite TW 45 ist der gegenseitige Abstand zweier Punkte P_{TW}, deren Lage wie folgt ermittelt wird. Die Punkte P_{TW} liegen, wie es Fig. 2 zeigt, jeweils im Schnittpunkt einer unter 45 Grad zur radialen Richtung verlaufenden Tangente t an die Reifenschulter mit einer flachen Kurve k, welche die Verlängerung der Außenkontur des Laufstreifens, über den seitlichen Rand der Bodenaufstandsflächenbreite hinaus, ist.

Bei der dargestellten Ausführungsform besteht die Bandage 8 aus einer radial inneren, den gesamten Gürtel 7 bis über die Seitenränder der radial inneren Gürtellage 7a hinaus abdeckenden Bandagenlage 8a und einer auf dieser mittig angeordneten und symmetrisch zur Äquatorebene des Reifens verlaufenden, ebenfalls über den Reifenumfang umlaufenden Mittenbandage 8b, welche sich über 10 % bis 80 %, insbesondere mindestens 50 %, der Breite der Bandagenlage 8a erstreckt. Die Bandagenlage 8a setzt sich aus zwei seitlichen Abschnitten 18 und einem mittleren Abschnitt 28 zusammen, welcher sich zumindest im Wesentlichen übereinstimmend zur Mittenbandage 8b erstreckt. Demnach erstreckt sich jeder seitliche Abschnitt 18 über eine Breite von 10 % bis 45 % der Bandagenlage 8a. Auf diese Weise wird die Bandage 8 in einem zentralen Bereich, der bei der dargestellten Ausführung aus dem mittleren Abschnitt 28 und der Mittenbandage 8b besteht, und zwei seitlichen Bereiche, welche bei der dargestellten Ausführung aus den seitlichen Abschnitten 18 besteht, gegliedert.

Die Bandagenlage 8a und die Mittenbandage 8b bestehen aus in Gummi eingebetteten, parallel zueinander und in Umfangsrichtung des Reifens verlaufenden Verstärkungskorden. Sowohl die Abschnitte 18, 28 der Bandagenlage 8a als auch die Mittenbandage 8b werden bevorzugt aus die Verstärkungskorde enthaltenden Kautschukmischungsbändem durch kontinuierliches und spiraliges Wickeln derselben über den Umfang des Reifens erstellt. Üblicherweise weisen die Bänder eine Breite von 10 mm bis 15 mm auf und enthalten 10 bis 15 in Streifenlängsrichtung verlaufende Verstärkungskorde. Die Bänder können jedoch beliebige Breite aufweisen und es können sowohl die Bandagenlage 8a als auch die Mittenbandage 8b aus breiten oder schmalen Bahnen von Bandagenmaterial erstellt werden. Die Anzahl der Verstärkungskorde kann auch weniger als 10 oder mehr als 15 pro 10 mm Breite des Bandagenmaterials betragen.

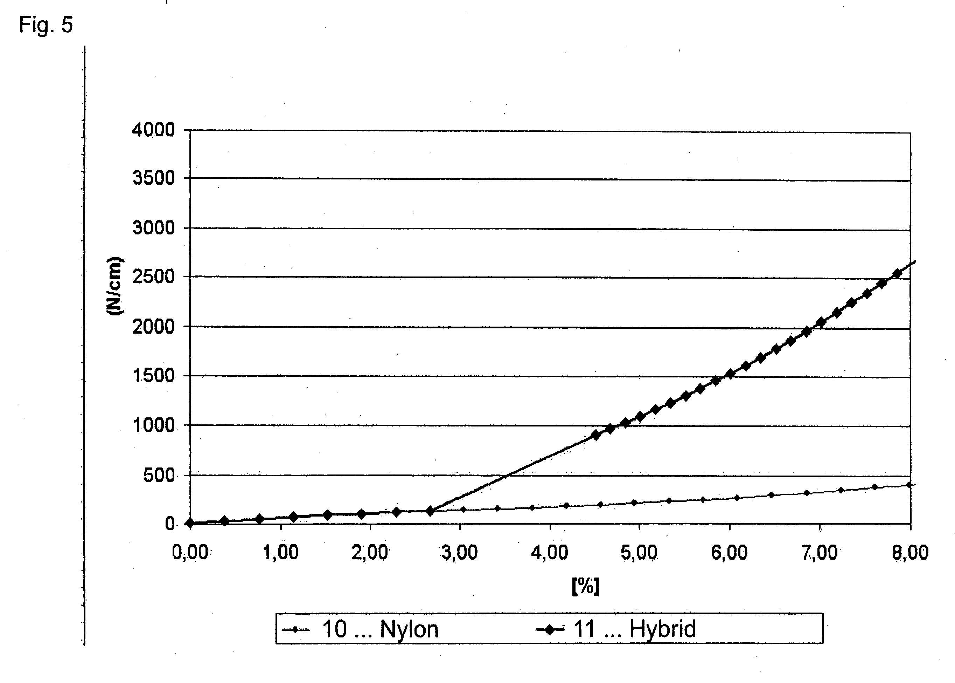

Dem Kraft-Dehnungs-Verhalten des Bandagenmaterials im zentralen Bereich und in den seitlichen Bereichen der Bandage 8 kommt eine besondere Bedeutung zu. Fig. 5 zeigt eine Kraft-Dehnungs-Kurve eines Bandagenmaterials 10, wie es beispielsweise in der Mittenbandage 8b und im mittleren Abschnitt 28 der Bandagenlage 8a eingesetzt werden kann, und eine Kraft-Dehnungs-Kurve eines Bandagenmaterials 11, wie es beispielsweise in den seitlichen Abschnitten 18 der Bandagenlage 8a eingesetzt werden kann. Die Kraft-Dehnungs-Kurven wurden gemäß ASTM D 885 ermittelt. Das Bandagenmaterial 10 enthält Nylon NKD06T (940x2-101, D728) als Verstärkungskord und weist einen nahezu linearen Kraft-Verlauf über der Dehnung [%], mit knapp unter 500 N/cm bei 8 % Dehnung auf. Fig. 5 zeigt ferner den Kraft-Dehnungs-Verlauf des Bandagenmaterials 11, welches Hydridkorde enthält, welche aus einem Kord-Kern aus Nylon bestehen, welcher mit einem oder mehreren Aramidfäden wendelförmig umwickelt ist. Aus dem Diagramm in Fig. 5 ist ersichtlich, dass das Bandagenmaterial 11 zwischen 0 und 2,5 % Dehnung einen moderaten Kraftanstieg auf 130 N/cm aufweist, ab etwa 2,5 % Dehnung, deutlich ab 3 % Dehnung, folgt ein steiler und linearer Anstieg der Kraft-Dehnungs-Kurve auf etwa 740 N/cm bei 4 % Dehnung und 2600 N/cm bei 8 % Dehnung.

Gemäß der Erfindung weist daher das im zentralen Bereich der Bandage 8 insgesamt eingesetzte Bandagenmaterial ein Kraft-Dehnungs-Verhalten mit einem linearen Anstieg bis zu 1000 N/cm bei 8 % Dehnung auf. Das Bandagenmaterial in den seitlichen Bereichen soll ein Kraft-Dehnungs-Verhalten mit 100 N/cm bis 500 N/cm bei 1 % bis 3 % Dehnung und einen im Wesentlichen linearen Anstieg auf 1500 N /cm bis 3000 N/cm, insbesondere mindestens 2000 N/cm, bei 8 % Dehnung aufweisen.

Gemeinsam mit einer bestimmten, erfindungsgemäßen Außenkontur zeigen Fahrzeugluftreifen mit derartigen Bandagenmaterialien ein besonderes dynamisches Wachstum bei zunehmender Geschwindigkeit. Auf dieses wird weiter unten näher eingegangen. Die Außenkontur des Reifens wird von einem Radius R_{A} bestimmt, welcher einen Kreisbogen definiert, der durch den zentralen Scheitel S und die Punkte P_{TW} verläuft. Zwischen dem Scheitel S und dem jeweiligen Punkt P_{TW} kann die Außenkontur entlang einer Kurve verlaufen, die sich beispielsweise aus Kreisbögen unterschiedlicher Radien oder aus anderen Kurven zusammen setzen lässt. Bei erfindungsgemäß ausgeführten Reifen wird die Außenkontur des Reifens derart ausgelegt, dass das Verhältnis von R_{A} zur Nennbreite N_{B} des Reifens (gemäß E.T.R.T.O. Standards) zwischen 1 und 3, insbesondere zwischen 1,3 und 2,0, und dass das Verhältnis der Breite TW 45 zur Nennbreite N_{B} zwischen 0,66 und 0,92, insbesondere zwischen 0,70 und 0,85, beträgt. Gemäß der Erfindung ausgeführte Reifen weisen daher in den Schulterbereichen eine wesentlich rundere Kontur auf als gemäß dem Stand der Technik ausgeführte Reifen mit ein oder zwei Vollbandagelagen mit Verstärkungskorden aus Nylon oder einem Material mit ähnlichem Kraft-Dehnungs-Verhalten. Fig. 2 zeigt für einen herkömmlich ausgeführten Reifen in strichlierter Linie die Außenkontur.

Fig. 3 und 4 zeigen in einer nicht maßstabsgetreuen Darstellung das dynamische Wachstum der Außenkontur des Laufstreifens eines erfindungsgemäß ausgeführten Reifens bei einer Geschwindigkeit von etwa 120 km/h (Kontur A₁₂₀ in Fig. 3) und bei einer Geschwindigkeit von etwa 260 km/h (Kontur A₁₆₀ in Fig. 4) im Vergleich zur Kontur bei niedriger Geschwindigkeit. Bei Geschwindigkeiten bis etwa 80 km/h ändert sich die Außenkontur nicht bzw. kaum, sie entspricht der beschriebenen Kontur des ruhenden Reifens. Durch seine runde Kontur hat der Reifen eine relativ schmale Aufstandsfläche. Dies ist besonders günstig für die Aquaplaning-Eigenschaften, da nur eine geringe Wasserverdrängung erforderlich ist. Bei höherer Geschwindigkeit ändert sich die Außenkontur des Reifens und nimmt bei rund 120 km/h die in Fig. 3 gezeigte Kontur A₁₂₀ an, welche dadurch entsteht, dass das Bandagenmaterial in den seitlichen Abschnitten 18 der Bandagenlage 8a ein Wachstum zulässt, im zentralen Bereich, welcher beispielsweise aus dem mittleren Abschnitt 28 und der Mittenbandage 8b besteht, ein Wachstum weitgehend verhindert wird. Die sich ergebende flache Kontur wirkt sich sehr günstig auf den Reifenabrieb aus, insbesondere in einem Geschwindigkeitsbereich, der auf Schnellstraßen und Autobahnen üblich ist.

Mit weiter zunehmender Geschwindigkeit werden die auf den Reifen wirkenden Fliehkräfte größer und die Außenkontur des Reifens ändert sich. Der Reifen nimmt eine runde Kontur, ähnlich der Ausgangskontur, an, da sich das Bandagenmaterial in den seitlichen Abschnitten 18 der Bandagenlage 8a im Vergleich zum Bandagenmaterial im zentralen Bereich (beispielsweise aus dem mittleren Abschnitt 28 und der Mittenbandage 8b bestehend) wesentlich weniger dehnt. Es erfolgt daher ein größeres Wachstum des Reifens im zentralen Bereich und ein geringeres in den seitlichen Bereichen. Die sich bei einer sehr hohen Geschwindigkeit einstellende runde Kontur stellt die Haltbarkeit des Reifens bei sehr hohen Geschwindigkeiten sicher.

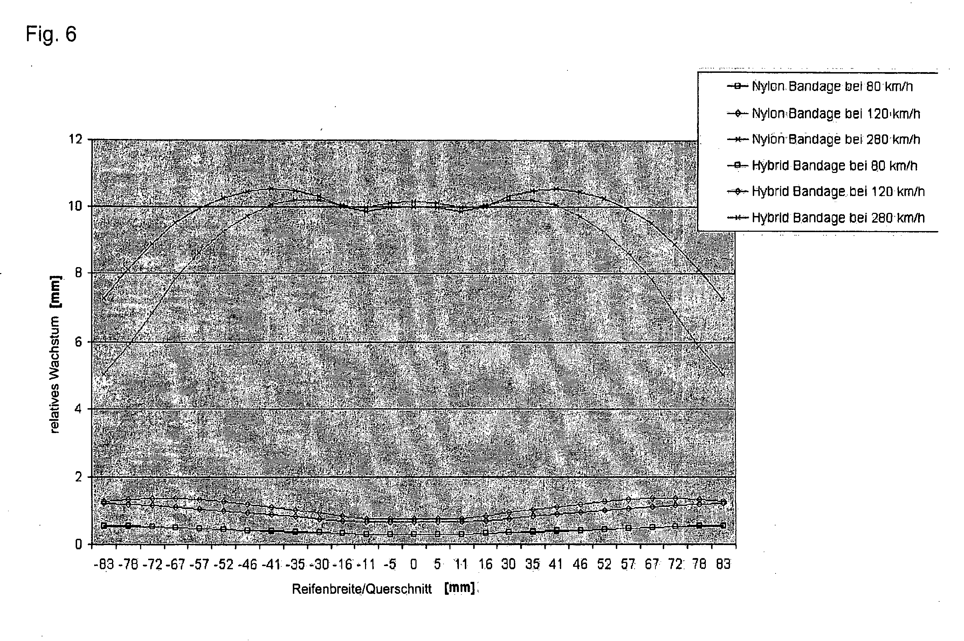

Fig. 6 zeigt ein Beispiel der geschwindigkeitsabhängigen Änderung der Reifenaußenkontur bei einem erfindungsgemäß ausgeführten Reifen mit verschiedenen Materialien in der Bandagenlage 8a und der Mittenbandage 8b, im Vergleich zu einem Reifen, bei dem in der Bandagenlage und in der Mittenbandage Nylon als Festigkeitsträger enthalten war. Gezeigt ist das relative dynamische Wachstum gegenüber der statischen Reifenkontur über der Reifenbreite in mm bei unterschiedlichen Geschwindigkeiten, wie beschrieben.

Die Gürtelbandage eines erfindungsgemäß ausgeführten Reifens kann auch aus zumindest einer über die Gürtelbreite verlaufenden Bandagenlage bestehen mit einem mittleren Abschnitt, welcher den zentralen Bereich bildet, und zwei seitlichen Abschnitten, welche die seitlichen Bereiche bilden. Im mittleren Abschnitt kann die Spulbandage mit einer größeren Überlappung erstellt wird, um derart einen Bereich mit entsprechendem Kraft-Dehnungs-Verlauf zu ergeben, oder es wird im mittleren Abschnitt ein Bandagenstreifen mit einer höheren Anzahl von Festigkeitsträgern aus Nylon oder aus einem Material mit entsprechend höherer Steifigkeit verwendet. Wichtig ist, dass die Bandagenmaterialien im zentralen Bereich und in den seitlichen Bereichen den beschriebenen und beanspruchten Kraft-Dehnungs-Verlauf aufweisen.

Die Erfindung ist auf die dargestellten und beschriebenen Ausführungsvarianten nicht eingeschränkt. Material und Konstruktion der Verstärkungskorde in den Bandagelagen bzw. in den Abschnitten kann entsprechend gewählt werden, um das gewünschte Kraft-Dehnungs-Verhalten zu erreichen. Die Erfindung ist ferner nicht auf PKW-Reifen eingeschränkt, sie ist auf andere Typen von Reifen, beispielsweise Van-Reifen (C-Reifen), Leicht-Lkw-Reifen oder Lkw-Reifen, anwendbar.

## Patentansprüche

1. Fahrzeugluftreifen in Radialbauart mit einer Radialkarkasse (2), einem Laufstreifen (1), einem zwischen Laufstreifen (1) und Karkasse (2) angeordneten zumindest zweilagigen Gürtel (7) sowie einer an der Außenseite des Gürtels (7) angeordneten, zumindest eine *den gesamten Gürtel (7) abdeckende* Bandagenlage (8a) aufweisenden Gürtelbandage (8) aus Bandagenmaterial mit in Umfangsrichtung verlaufenden Verstärkungskorden,
**gekennzeichnet durch**
eine am montierten und aufgepumpten Reifen gemessene Außenkontur, die definiert ist **durch** ein Verhältnis von R_{A} zur Nennbreite N_{B} von 1 bis 3 und ein Verhältnis von TW 45 zur Nennbreite N_{B} von 0,66 bis 0,92,
wobei TW 45 die Breite des Laufstreifens (1) zwischen zwei Punkten P_{TW} ist, wobei jeder dieser Punkte P_{TW} der Schnittpunkt einer unter 45° zur Radialen an der Schulteraußenseite verlaufenden Tangente (t) mit einer in Verlängerung der Außenkontur des Laufstreifens (1) verlaufenden Kurve (k) ist,
wobei R_{A} der Radius eines Kreisbogens ist, welcher **durch** die beiden Punkte P_{TW} und den Scheitelpunkt (S) der Außenkontur des Laufstreifens (1) geht,
ferner **durch**
*eine auf der den gesamten Gürtel (7) abdeckenden Bandagenlage (8a) mittig angeordneten und symmetrisch zur Äquatorebene des Reifens verlaufenden, ebenfalls über den Reifenumfang umlaufenden Mittenbandage (8b), wobei ein zentraler Bereich der Gürtelbandage (8) aus dem zentralen Abschnitt (28) der Bandagenlage (8a) und der Mittenbandage (8b) besteht, deren Breiten zumindest im Wesentlichen übereinstimmen,*
ein Bandagenmaterial im zentralen Bereich (28, 8b) der Gürtelbandage (8), welches einen zumindest im Wesentlichen linearen Kraft-Dehnungs-Verlauf mit bis zu 1000 N/cm bei 8 % Dehnung aufweist,
und ein Bandagenmaterial in den seitlichen *Abschnitten (18)* der Bandagenlage (8a), welches einen Kraft-Dehnungs-Verlauf mit 100 N/cm bis 500 N/cm bei 1 % bis 3 % Dehnung und einen im Wesentlichen linearen Anstieg auf 1500 N/cm bis 3000 N/cm bei 8 % Dehnung aufweist.

2. Fahrzeugluftreifen nach Anspruch 1, **dadurch gekennzeichnet, dass** das Bandagenmaterial in den seitlichen Bereichen (18) einen Kraft-Dchnungs-Verlauf mit bis zu 150 N/cm bis 2,5 % Dehnung und mindestens 2000 N/cm bei 8 % Dehnung aufweist.

3. Fahrzeugluftreifen nach Anspruch 1 oder 2, **dadurch gekennzeichnet, dass** der zentrale Bereich eine Breite von 10 % bis 80 %, insbesondere mindestens 50 %, der Bandagenlage (8a) aufweist.

4. Fahrzeugluftreifen nach einem der Ansprüche 1 bis 3, **dadurch gekennzeichnet, dass** der Verstärkungskord (11) in den seitlichen Bereichen der Gürtelbandage (8) bzw. den seitlichen Abschnitten (18) der Bandagenlage (8a) ein Hybridkord ist, welcher vorzugsweise einen Kord-Kern aus Nylon und eine Umwicklung aus Aramid aufweist.

5. Fahrzeugluftreifen nach einem der Ansprüche 1 bis 3, **dadurch gekennzeichnet, dass** der Verstärkungskord im zentralen Bereich der Gürtelbandage (8) bzw. im zentralen Abschnitt (28) der Bandagenlage (8a) sowie in der Mittenbandage (8b) ein Nylonkord ist.

6. Fahrzeugluftreifen nach Anspruch 1, **dadurch gekennzeichnet, dass** das Verhältnis des Radius R_{A} zur Nennbreite N_{B} 1,3 bis 2,0 beträgt.

7. Fahrzeugluftreifen nach Anspruch 1 oder 6, **dadurch gekennzeichnet, dass** das Verhältnis der Laufstreifenbreite TW 45 zur Nennbreite N_{B} zwischen 0,70 und 0,85 beträgt.

## Claims

1. Pneumatic vehicle tyre of a radial type of construction, with a radial casing (2), a tread rubber (1), an at least two-ply breaker belt (7), arranged between the tread rubber (1) and the casing (2), and also a belt bandage (8), arranged on the outer side of the breaker belt (7), having at least one bandage ply (8a) covering the entire breaker belt (7) and comprising bandage material with reinforcing cords running in the circumferential direction,
**characterized by**
an outer contour, measured on the fitted and inflated tyre, that is defined by a ratio of R_{A} to the nominal width N_{B} of 1 to 3 and a ratio of TW 45 to the nominal width N_{B} of 0.66 to 0.92,
where TW 45 is the width of the tread rubber (1) between two points P_{TW}, each of these points P_{TW} being the point of intersection of a tangent (t) running at 45° to the radial to the outer side of the shoulder with a curve (k) running as an extension of the outer contour of the tread rubber (1),
where R_{A} is the radius of a circular arc that passes through the two points P_{TW} and the vertex (S) of the outer contour of the tread rubber (1),
and by
a central bandage (8b), arranged centrally on the bandage ply (8a) that covers the entire breaker belt (7) and running symmetrically in relation to the equatorial plane of the tyre, and likewise running around the circumference of the tyre, the central region of the belt bandage (8) consisting of the central portion (28) of the bandage ply (8a) and the central bandage (8b), the widths of which at least substantially coincide,
a bandage material in the central region (28, 8b) of the belt bandage (8) that has an at least substantially linear stress-strain characteristic with up to 1000 N/cm when there is an 8% extension under strain,
and a bandage material in the lateral portions (18) of the bandage ply (8a) that has a stress-strain characteristic with 100 N/cm to 500 N/cm when there is a 1% to 3% extension under strain and a substantially linear rise to 1500 N/cm to 3000 N/cm when there is an 8% extension under strain.

2. Pneumatic vehicle tyre according to Claim 1, **characterized in that** the bandage material has in the lateral regions (18) a stress-strain characteristic with up to 150 N/cm up to a 2.5% extension under strain and at least 2000 N/cm when there is an 8% extension under strain.

3. Pneumatic vehicle tyre according to Claim 1 or 2, **characterized in that** the central region has a width of 10% to 80%, in particular at least 50%, of the bandage ply (8a).

4. Pneumatic vehicle tyre according to one of Claims 1 to 3, **characterized in that** the reinforcing cord (11) in the lateral regions of the belt bandage (8) or the lateral portions (18) of the bandage ply (8a) is a hybrid cord, which preferably has a cord core of nylon and a wound surround of aramid.

5. Pneumatic vehicle tyre according to one of Claims 1 to 3, **characterized in that** the reinforcing cord in the central region of the belt bandage (8) or in the central portion (28) of the bandage ply (8a) and also in the central bandage (8b) is a nylon cord.

6. Pneumatic vehicle tyre according to Claim 1, **characterized in that** the ratio of the radius R_{A} to the nominal width N_{B} is 1.3 to 2.0.

7. Pneumatic vehicle tyre according to Claim 1 or 6, **characterized in that** the ratio of the tread rubber width TW 45 to the nominal width N_{B} is between 0.70 and 0.85.

## Revendications

1. Pneumatique de véhicule de construction radiale avec une carcasse radiale (2), une bande de roulement (1), une ceinture (7) ayant au moins deux couches disposée entre la bande de roulement (1) et la carcasse (2), ainsi qu'un bandage de ceinture (8) en matériau de bandage disposé sur le côté extérieur de la ceinture (7), présentant au moins une couche de bandage (8a) recouvrant toute la ceinture (7), avec des cordes de renfort s'étendant dans la direction périphérique, **caractérisé par**
un contour extérieur mesuré sur le pneu monté et gonflé, qui est défini par un rapport R_{A} sur la largeur nominale N_{B} de 1 à 3 et un rapport de TW 45 sur la largeur nominale N_{B} de 0,66 à 0,92,
TW 45 étant la largeur de la bande de roulement (1) entre deux points P_{TW}, chacun de ces points P_{TW} étant le point d'intersection d'une tangente (t) s'étendant suivant un angle de 45° par rapport à des radiales au côté extérieur de l'épaulement avec une courbe (k) s'étendant dans le prolongement du contour extérieur de la bande de roulement (1),
R_{A} étant le rayon d'un arc de cercle qui passe par les deux points P_{TW} et le sommet (S) du contour extérieur de la bande de roulement (1),
et **caractérisé en outre par**
un bandage central (8b) disposé centralement sur la couche de bandage (8a) recouvrant toute la ceinture (7) et s'étendant symétriquement par rapport au plan équatorial du pneu, s'étendant également sur le tour de la périphérique du pneu, une région centrale du bandage de ceinture (8) se composant de la portion centrale (28) de la couche de bandage (8a) et du bandage central (8b) dont les largeurs coïncident au moins essentiellement, un matériau de bandage dans la région centrale (28, 8b) du bandage de ceinture (8), lequel présente une allure au moins essentiellement linéaire du rapport force-étirement, avec jusqu'à 1000 N/cm pour un étirement de 8 %,
et un matériau de bandage dans les portions latérales (18) de la couche de bandage (8a), qui présente une allure du rapport force-étirement de 100 N/cm à 500 N/cm pour un étirement de 1 % à 3 % et une augmentation essentiellement linéaire de 1500 N/cm à 3000 N/cm pour un étirement de 8 %.

2. Pneumatique de véhicule selon la revendication 1, **caractérisé en ce que** le matériau du bandage présente, dans les régions latérales (18), une allure du rapport force-étirement de jusqu'à 150 N/cm jusqu'à un étirement de 2,5 % et d'au moins 2000 N/cm pour un étirement de 8 %.

3. Pneumatique de véhicule selon la revendication 1 ou 2, **caractérisé en ce que** la région centrale présente une largeur de 10 % à 80 %, en particulier d'au moins 50 %, de la couche de bandage (8a).

4. Pneumatique de véhicule selon l'une quelconque des revendications 1 à 3, **caractérisé en ce que** la corde de renfort (11) dans les régions latérales du bandage de ceinture (8) ou les portions latérales (18) de la couche de bandage (8a) est une corde hybride qui présente de préférence un noyau de corde en nylon et un enroulement en aramide.

5. Pneumatique de véhicule selon l'une quelconque des revendications 1 à 3, **caractérisé en ce que** la corde de renfort dans la région centrale du bandage de ceinture (8) ou dans la portion centrale (28) de la couche de bandage (8a) et dans le bandage central (8b) est une corde en nylon.

6. Pneumatique de véhicule selon la revendication 1, **caractérisé en ce que** le rapport du rayon R_{A} à la largeur nominale N_{B} vaut de 1,3 à 2,0.

7. Pneumatique de véhicule selon la revendication 1 ou 6, **caractérisé en ce que** le rapport de la largeur de la bande de roulement TW 45 à la largeur nominale N_{B} vaut entre 0,70 et 0,85.
